# EUROPEAN PATENT SPECIFICATION

(11) **EP 3 187 604 B1**
(45) Date of publication and mention of the grant of the patent: **21.03.2018**
(21) Application number: 16002607.6
(22) Date of filing: 07.12.2016
(51) Int. Cl.: C22C 21/08, C22C 21/14, C22C 21/16, C22F 1/043

(54) **FORGED ALUMINUM ALLOY FOR AUTOMOBILES**
GESCHMIEDETE ALUMINIUMLEGIERUNG FÜR KRAFTFAHRZEUGE
ALLIAGE EN ALUMINIUM FORGÉ POUR AUTOMOBILES

(30) Priority: 14.12.2015 JP 2015243652
(43) Date of publication of application: 05.07.2017
(73) Proprietor: Kabushiki Kaisha Kobe Seiko Sho (Kobe Steel, Ltd.), Kobe-shi, Hyogo 651-8585 (JP)
(72) Inventor: Hori, Masayuki, Inabe-shi, Mie, 511-0284 (JP)
(74) Representative: Müller-Boré & Partner Patentanwälte PartG mbB

(56) References cited:
- EP-A1- 0 987 344
- EP-A1- 2 921 567
- EP-A2- 2 003 219
- WO-A1-2015/146654
- JP-A- 2003 277 868
- US-A1- 2015 354 044

## Description

The present invention relates to a forged aluminum alloy for automobiles.

6000 series aluminum (Al) alloy stipulated in JIS is suitably used as the material for a structural body such as a marine vessel, vehicle, land structure, building, guard rail, home electric appliances, bus bar, electric cable, machinery, and automobile component because it is excellent in strength and corrosion resistance.

In recent years, with respect to the forged Al alloy for an automobile use such as vehicles and automotive components (forged Al alloy for automobiles), because of the reasons such as reducing the vehicle weight and improving the fuel economy, weight reduction has been strongly desired. In order to reduce the weight of the forged Al alloy for automobiles, high-strengthening is necessary, and development of such a raw material has been strongly desired. The technologies capable of coping with such a requirement have been disclosed in JP-A Heisei 11-71663, JP-A Heisei 9-67659, and JP-A 2000-282198 for example.

In JP-A Heisei 11-71663, an artificial temper aging treatment method for Al-Mg-Si-based Al alloy is described in which preliminary temper aging treatment of the first step is executed at 185-200°C for 20-80 min, and final temper aging treatment of the second step is executed at 205-220°C for 5-30 min.

In JP-A Heisei 11-71663, it is described that, by this invention, in the artificial temper aging treatment method for Al-Mg-Si-based Al alloy, the artificial temper aging treatment time can be shortened using existing facilities and by combination of the heat treatment condition. Also, in JP-A Heisei 11-71663, it is described that, by this invention, the productivity can be improved because products having sufficient mechanical strength and color tone can be obtained.

Further, with respect to the Al alloy described in JP-A Heisei 11-71663, as the mechanical property, it is shown that the proof stress is 184-190 MPa, and the tensile strength is 214-217 MPa.

Also, in JP-A Heisei 9-67659, a heat treatment method for Al-Mg-Si-based Al alloy is described in which, when an Al-Mg-Si-based Al alloy extrusion is subjected to artificial age hardening treatment (T₅ treatment), the first step preliminary temper aging treatment is executed at 160-180°C for 0.5-1.5 hrs, and the second step preliminary temper aging treatment is thereafter executed at 195-220°C for 1.5-8.0 hrs.

In JP-A Heisei 9-67659, it is described that, by this invention, the strength of the alloy can be increased in a short time compared to heat treatment methods of prior arts. Also, in JP-A Heisei 9-67659, it is described that the cost can be reduced by cutting the energy cost, the productivity can be improved, and a large effect can be expected economically.

Further, with respect to the Al alloy described in JP-A Heisei 9-67659, as the mechanical property, it is shown that the proof stress is approximately 196-206 MPa (approximately 20-21 kg/mm²), and the tensile strength is approximately 221-230 MPa (approximately 22.5-23.5 kg/mm²).

Also, in JP-A 2000-282198, with respect to an Al-Mg-Si-based alloy containing Mg: 0.30-0.70 mass% and Si: 0.15-0.70 mass% with the balance being Al and inevitable impurities, a proof stress value control method for the Al-Mg-Si-based alloy is described in which artificial temper aging treatment is executed in an over-aging region by executing heated retention at 190°C or above for 6 hrs or more for one or more times.

In JP-A 2000-282198, it is described that, by this invention, dispersion of the proof stress value caused by variation of the artificial temper aging treatment condition and variation of the natural temper aging treatment condition of the prior step thereof can be reduced. Also, in JP-A 2000-282198, it is described that the working accuracy of the alloy thereafter can be improved, and that, because dispersion of the proof stress value is small, selection and optimization of the artificial temper aging treatment condition for obtaining the target proof stress value become easy.

Further, with respect to the Al alloy described in JP-A 2000-282198, it is shown that the 0.2% proof stress value of one in which the artificial temper aging treatment is executed twice becomes 131-145 MPa.

According to the inventions described in JP-A Heisei 11-71663, JP-A Heisei 9-67659, and JP-A 2000-282198, because the artificial temper aging treatment is executed twice, the acicular precipitates (6" phase) can be grown largely, and the strength can be thereby increased compared to the material of the prior art of the time before each invention is proposed.

However, the inventions described in JP-A Heisei 11-71663, JP-A Heisei 9-67659, and JP-A 2000-282198 were for thin structural bodies such as an aluminum sash for architectural use, and, probably because the manufacturing condition and the like were not suitable as an forged Al alloy for automobiles, they could not be said to have sufficient strength as the forged Al alloy for automobiles.

Further, although the artificial temper aging treatment of the first step and the artificial temper aging treatment of the second step are executed in all of the inventions described in JP-A Heisei 11-71663, JP-A Heisei 9-67653, and JP-A 2000-282198, in each literature, there is no description whether or not a cooling treatment is executed after the artificial temper aging treatment of the first step. If the cooling treatment is executed, such event would be described, and therefore it is assumed that the cooling treatment is not executed in all of them. WO 2015/146654 discloses a forged aluminium alloy having excellent corrosion resistance and high strength and toughness in which the Q phase has a major axis of 50-500nm.

The present invention has been achieved in view of the situations described above, and its object is to provide a forged aluminum alloy for automobiles having a high strength.

A forged aluminum alloy for automobiles related to the present invention contains Mg: 0.70-1.50 mass%, Si: 0.60-1.50 mass%, Cu: 0.20-0.70 mass%, and Ti: 0.001-0.100 mass%, and contains two elements or more out of Mn: 0.01-0.80 mass%, Cr: 0.10-0.30 mass% and Zr: 0.05-0.25 mass%, the balance being Al and inevitable impurities, in which the number density of acicular precipitates having the circle equivalent diameter of 2-10 nm is 30,000 pieces/µm³ or more.

Thus, with respect to the forged aluminum alloy for automobiles related to the present invention, the number density of the acicular precipitates can be increased because Mg, Si and Cu which easily precipitate the acicular precipitates are contained by a predetermined amount respectively, and the grain can be refined because Ti is contained by a predetermined amount. The forged aluminum alloy for automobiles related to the present invention can be high-strengthened by these effects. Also, because the forged aluminum alloy for automobiles related to the present invention contains two elements or more out of Mn, Cr and Zr by a predetermined amount respectively, the size of the acicular precipitates can be made within a predetermined range. Further, the forged aluminum alloy for automobiles related to the present invention can be made high-strengthened by the acicular precipitates because the number density of the acicular precipitates having the circle equivalent diameter of 2-10 nm is made 30,000 pieces/µm³ or more.

The forged aluminum alloy for automobiles related to the present invention has a high strength and is excellent in corrosion resistance.

Fig. 1 is a TEM image of a cross section of the forged material. The scale bar in the drawing shows 50 nm.
Fig. 2 is an explanatory drawing in which a state of the acicular precipitates precipitated in the forged material is illustrated based on the TEM image of Fig. 1 to facilitate understanding.
Fig. 3 is an explanatory drawing illustrating the transition of the temperature in a preferable manufacturing method for the forged material related to the present invention. The horizontal axis in the drawing represents the time, and the vertical axis represents the temperature.
Fig. 4A is an explanatory drawing explaining the precipitation state of the acicular precipitates of a case the artificial temper aging treatment of the first step and the cooling treatment are executed.
Fig. 4B is an explanatory drawing explaining a state the acicular precipitates have grown by executing the artificial temper aging treatment of the second step.
Fig. 5 is an explanatory drawing illustrating the transition of the temperature of the solution heat treatment, quenching treatment, and artificial temper aging treatment in the manufacturing method of the forged material executed commonly. The horizontal axis in the drawing represents the time, and the vertical axis represents the temperature.
Fig. 6 is an explanatory drawing explaining a state the artificial temper aging treatment is executed only once and the acicular precipitates are precipitated by the manufacturing method of the forged material executed commonly.

### [Forged aluminum alloy for automobiles]

Below, embodiments of the forged aluminum alloy for automobiles (may be hereinafter simply referred to as "forged material") related to the present invention will be described in detail.

The forged material related to the present invention contains Mg: 0.70-1.50 mass%, Si: 0.60-1.50 mass%, Cu: 0.20-0.70 mass%, and Ti: 0.001-0.100 mass%. Also, the forged material related to the present invention contains two elements or more out of Mn: 0.01-0.80 mass%, Cr: 0.10-0.30 mass%, and Zr: 0.05-0.25 mass%. The balance of the forged material related to the present invention is Al and inevitable impurities.

Further, in the forged material related to the present invention, in the observed surface of the transmission electron microscope (TEM) (TEM image), the number density of the acicular precipitates having the circle equivalent diameter of 2-10 nm is made 30,000 pieces/µm³ or more.

Below, these constituent elements will be described in detail.

### (Mg, Si, Cu)

All of Mg, Si and Cu facilitate precipitation of the acicular precipitates. In the present invention, by containing Mg by 0.70-1.50 mass%, Si by 0.60-1.50 mass%, and Cu by 0.20-0.70 mass%, the number density of the acicular precipitates can be increased, and the forged material can be high-strengthened.

When even one element out of Mg, Si and Cu becomes less than the lower limit value described above, the number density of the acicular precipitates becomes insufficient, and the strength of the forged material becomes insufficient.

On the other hand, when even one element out of Mg and Si exceeds the upper limit value described above, the elongation lowers by the artificial temper aging treatment. Also, when Cu exceeds the upper limit value described above, the corrosion resistance deteriorates.

From a viewpoint of achieving high-strengthening further, it is preferable to make Mg 0.80 mass% or more, and more preferably 0.85 mass% or more. From a similar viewpoint, it is preferable to make Si 0.90 mass% or more, and more preferably 1.00 mass% or more. Also, from a similar viewpoint, it is preferable to make Cu 0.35 mass% or more, and more preferably 0.40 mass% or more.

Further, from a viewpoint of increasing the elongation, it is preferable to make Mg 1.40 mass% or less, and more preferably 1.30 mass% or less. From a similar viewpoint, it is preferable to make Si 1.30 mass% or less, and more preferably 1.20 mass% or less. Also, from a viewpoint of increasing the corrosion resistance, it is preferable to make Cu 0.60 mass% or less, and more preferably 0.50 mass% or less.

### (Ti)

Ti refines the grain of the time after casting. In the present invention, by containing 0.001-0.100 mass% of Ti, the forged material can be high-strengthened by refinement of the grain.

When Ti becomes less than the lower limit value described above, the effect of refining the grain cannot be secured sufficiently, and the forged material cannot be high-strengthened.

On the other hand, when Ti exceeds the upper limit value described above, there is a risk that coarse crystallized grains (intermetallic compound) are formed at the time of casting and the elongation lowers.

From a viewpoint of achieving further high-strengthening, it is preferable to make Ti 0.010 mass% or more, and more preferably 0.020 mass% or more.

From a viewpoint of increasing the elongation, it is preferable to make Ti 0.050 mass% or less, and more preferably 0.040 mass% or less.

### (Mn, Cr, Zr)

Mn, Cr and Zr adjust the size of the acicular precipitates to a predetermined range, refine the grain of the forged material, and increase the strength. In the present invention, for the purpose of high-strengthening, it is necessary to contain two elements or more out of 0.01-0.80 mass% of Mn, 0.10-0.30 mass% of Cr, and 0.05-0.25 mass% of Zr.

In all cases of when none of Mn, Cr and Zr is contained, when two elements or more out of Mn, Cr and Zr are contained but all of them are less than the lower limit value described above, and when only one element is contained although it is contained within the range described above, the effects described above cannot be secured sufficiently, and high-strengthening cannot be achieved.

On the other hand, even when two elements or more out of Mn, Cr and Zr are contained, if the content of even one contained element exceeds the upper limit value described above, there is a risk that coarse crystallized grains (intermetallic compound) are formed at the time of casting and the elongation lowers.

From the viewpoint of achieving high-strengthening further, it is preferable to make Mn 0.10 mass% or more, and more preferably 0.30 mass% or more. From a similar viewpoint, it is preferable to make Cr 0.12 mass% or more, and more preferably 0.15 mass% or more. Also, from a similar viewpoint, it is preferable to make Zr 0.07 mass% or more, and more preferably 0.10 mass% or more.

Further, from a viewpoint of increasing the elongation, it is preferable to make Mn 0.70 mass% or less, and more preferably 0.60 mass% or less. From a similar viewpoint, it is preferable to make Cr 0.20 mass% or less. Also, from a similar viewpoint, it is preferable to make Zr 0.20 mass% or less, and more preferably 0.15 mass% or less.

In addition, from a viewpoint of achieving high-strengthening further, it is preferable to make the total amount of Mn, Cr and Zr 0.25 mass% or more, and more preferably 0.30 mass% or more.

On the other hand, from a viewpoint of increasing the elongation further, it is preferable to make the total amount of Mn, Cr and Zr 1.00 mass% or less, and more preferably 0.90 mass% or less.

### (Balance)

The balance of the forged material related to the present invention is Al and inevitable impurities. The inevitable impurities are impurities mixed in inevitably at the time of melting and the like. As the impurities in the present invention, Zn, Fe, Ni, V, Na and the like can be cited for example. In the present invention, these impurities can be contained (are allowed to be contained) within a range not impairing various properties of the forged material. The content allowed as the inevitable impurities is less than 0.25 mass% for Zn, 0.3 mass% or less for Fe, 0.05 mass% or less for Ni, 0.05 mass% or less for V, and 0.05 mass% or less for Na. Also, in the present invention, within a range not imparting an adverse impact to the effect of the forged material related to the present invention, in addition to these inevitable impurities, other elements may be contained with the upper limit of 0.05 mass% for example.

As an alloy having the chemical composition described above, the 6000 series Al alloy stipulated in JIS can be cited. In concrete terms, the forged material related to the present invention is 6061 alloy or 6N01 alloy stipulated in JIS.

### (Number density of acicular precipitates)

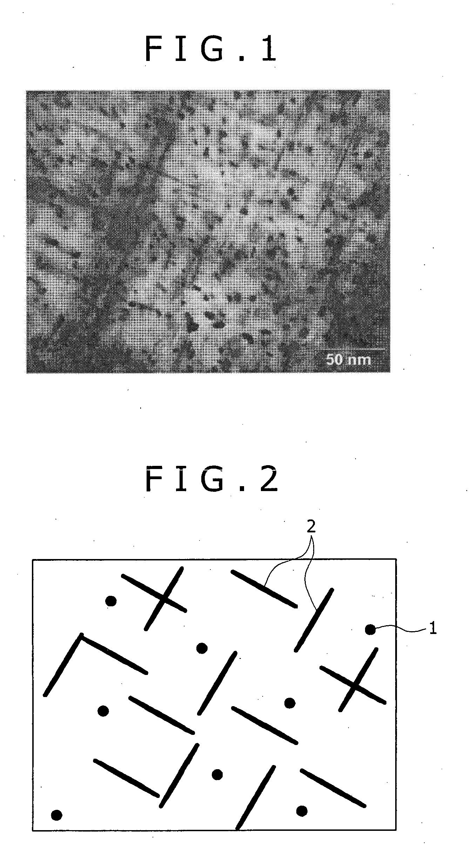

The number density of the acicular precipitates affects the strength of the forged material. As the number density of the acicular precipitates of a constant size or more is higher, the strength of the forged material becomes high. Here, the acicular precipitates precipitated in the forged material will be described referring to Fig. 1 and Fig. 2. Fig. 1 is a TEM image of a cross section of the forged material. Fig. 2 is an explanatory drawing in which a state of the precipitates precipitated in the forged material is illustrated based on the TEM image of Fig. 1 to facilitate understanding.

Because the orientation of the acicular precipitates of the forged material is fixed to 3 directions, when a cross section of the forged material is observed under a TEM, as illustrated in Fig. 1, it can be confirmed that acicular precipitates that can be seen as a black circular shape (point shape) and acicular precipitates that can be seen as a linear shape exhibiting thin gray to black color are formed by plural numbers respectively. The acicular precipitates that can be seen as a black circular shape are formed in a direction perpendicular to the paper surface of Fig. 1 namely the direction directed from the back side of the paper surface toward the front side of the paper surface. Also the acicular precipitates that can be seen as a linear shape exhibiting thin gray to black color are formed in parallel with the paper surface of Fig. 1 or at an angle slightly inclined with respect to the paper surface. Further, in Fig. 2, in order to facilitate understanding, the acicular precipitates that can be seen as a black point shape were expressed by the reference sign 1, and other acicular precipitates were expressed by the reference sign 2. In other words, in Fig. 2, the acicular precipitates exhibiting thin gray to black color and seen as a linear shape in Fig. 1 are illustrated clearly as the acicular precipitates 2.

All of the acicular precipitates illustrated in Fig. 1 are same which are different from each other only in the orientation of formation, and the number density of the acicular precipitates oriented in each direction is also generally equal. However, as described above, with respect to the precipitates other than the acicular precipitates that can be seen as a black point shape illustrated in Fig. 1, the shape (outer periphery) thereof cannot be grasped clearly occasionally even by the TEM image. Therefore, it is difficult to count the number density of the precipitates other than the acicular precipitates that can be seen as a black point shape even by the TEM image.

However, because the number density of the acicular precipitates 1 and the acicular precipitates 2 oriented to each direction are generally equal as described above, by counting the number density per unit volume (pieces/µm³) of the acicular precipitates 1 that can be seen as a black point shape and multiplying 3 direction portions (multiplying by 3), it can be deemed to be the number density per unit volume (pieces/µm³) with respect to the acicular precipitates of 3 directions. Therefore, as described above, by counting the number density per unit volume of the acicular precipitates 1 that can be seen as a black point shape, the precipitation state of the precipitates in the forged material namely the number density of the acicular precipitates of 3 directions can be easily grasped.

In the present invention, in order to count the acicular precipitates 1 that can be seen as a black point shape, namely in order to eliminate the acicular precipitates 2 from the counting object, it is preferable to make those whose aspect ratio (the ratio of the long diameter and the short diameter of the acicular precipitates) is 1-2 the counting object. Also, the circle equivalent diameter of the acicular precipitates 1 whose aspect ratio is 1-2 which become the counting object is made 2-10 nm. With respect to the acicular precipitates 1 whose aspect ratio is 1-2 and circle equivalent diameter is 2-10 nm, the size in the longitudinal direction becomes 50 nm or more. Also, the acicular precipitates whose aspect ratio is 1-2 and circle equivalent diameter is less than 2 nm do not affect improvement of the hardness even if they are precipitated, and therefore they are excluded from the counting object. Further, the acicular precipitates whose aspect ratio is 1-2 and circle equivalent diameter exceeds 10 nm are hardly generated from the first, and therefore they are excluded from the counting object.

In the present invention, because the number density of the acicular precipitates grasped as described above is made 30,000 pieces/µm³ or more, the forged material can be high-strengthened. As the number density of the acicular precipitates is higher, the forged material is high-strengthened. Therefore, the number density of the acicular precipitates is preferable to be as high as possible.

As described above, with respect to the forged material related to the present invention, Mg, Si, Cu and Ti are contained by a predetermined amount respectively, two elements or more out of Mn, Cr and Zr are contained by a predetermined amount respectively, and the number density of the predetermined acicular precipitates is made 30,000 pieces/µm³ or more, and therefore it comes to have high strength.

### (Size measurement and counting method of number density of acicular precipitates)

Size measurement and counting of the number density of the acicular precipitates can be executed by using thin film samples taken from the forged material, executing electrolytic polishing by the electrolytic polishing method using a solution of perchloric acid:ethanol=1:9 and a solution of nitric acid:methanol=1:3, and observing the samples by a transmission electron microscope (TEM). Any type of TEM can be used, but it is preferable to use JEM-2100 made by JEOL for example. With respect to photographing of the TEM image, it is preferable that an electron beam is incident from <001> direction to the parent phase of the thin film sample with the acceleration voltage of 120 kV, the observation surface is made (200), and 5 fields of view are observed. The magnification of observation is preferable to be 500,000 times. With respect to the observation position, it is preferable to measure the thickness of the observation part from the equal thickness interference fringe, and to make the observation position only the position where the thickness becomes 1 µm or less.

It is preferable to execute size measurement and counting of the number density of the acicular precipitates using an image analysis software Winproof (Mitani Corporation, Version 6.3). It is preferable to calculate the size of the acicular precipitates by the circle equivalent diameter of the acicular precipitates that can be seen as a point shape (namely the acicular precipitates whose aspect ratio is 1-2 and circle equivalent diameter is 2-10 nm).

Also, the thickness of the observation part is measured from the equal thickness interference fringe by TEM observation, the result is multiplied by the area of the measurement range, the volume observed at the surface of the TEM observation region is thereby calculated, and the result obtained by counting all of the number of pieces of the acicular precipitates that can be seen as a point shape and multiplying the same by 3 is made the number of pieces of the acicular precipitates. Further, by converting this number of pieces to a value per unit volume, the number density (pieces/µm³) of the acicular precipitates can be obtained.

### (An example of manufacturing method)

The manufacturing method for the forged material related to the present invention described above is not limited to a peculiar one, and various methods can be possible. An example of the preferable manufacturing method is as follows. Also, the forged material related to the present invention can be manufactured by general manufacturing facilities with which forged material is manufactured.

As an example of the preferable manufacturing method for the forged material related to the present invention, for example, casting for melting material and obtaining an ingot, homogenization for homogenizing the ingot, forging of heating the ingot to a predetermined temperature, executing plastic work, and obtaining the forged material, and so on can be executed in this order. Also, trimming work treatment for removing excess burrs and the like of the forged material obtained in forging and so on can be executed according to the necessity. Each treatment up to here can be executed under a condition normally executed in manufacturing forged material. For example, the homogenization can be executed by 500°C×7 hrs, and forging can be executed using a hydraulic forging press under a condition of 500°C of the starting temperature and 370°C of the finishing temperature.

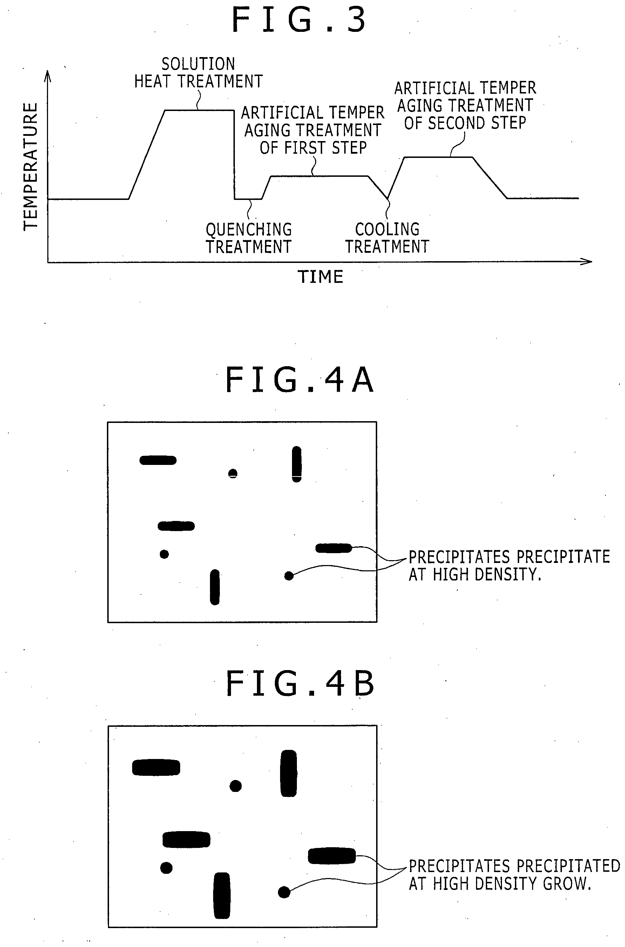

Also, with respect to the preferable manufacturing method for the forged material related to the present invention, next to the forging treatment or the trimming work treatment described above, to consecutively execute the solution heat treatment, quenching treatment, artificial temper aging treatment of the first step, cooling treatment, and artificial temper aging treatment of the second step can be cited. The condition of these treatments will be described below. Also, Fig. 3 is an explanatory drawing illustrating the transition of the temperature in the preferable manufacturing method for the forged material related to the present invention (from the solution heat treatment to the artificial temper aging treatment of the second step).

As illustrated in Fig. 3, in the preferable manufacturing method for the forged material related to the present invention, after executing the solution heat treatment and the quenching treatment, the artificial temper aging treatment of the first step is executed. For example, the solution heat treatment can be executed under a condition of 550°C×4 hrs, and the quenching treatment can be executed by putting the forged material into the water of 40°C.

Also, after finishing the artificial temper aging treatment of the first step, once the cooling treatment is executed, and the artificial temper aging treatment of the second step is executed thereafter. It is preferable to execute the artificial temper aging treatment of the second step at a temperature higher than that of the artificial temper aging treatment of the first step. The artificial temper aging treatment of the second step can be shortened compared to the artificial temper aging treatment of the first step. In concrete terms, it is preferable to execute the artificial temper aging treatment of the first step under a condition of 150-180°C×5-24 hrs and to execute the cooling treatment so as to reach a temperature between the room temperature and approximately 100°C. Also, it is preferable to execute the artificial temper aging treatment of the second step under a condition of 175-210°C×1.5-8 hrs.

When the heat treatment by the artificial temper aging treatment of the first step at a low temperature and the cooling treatment are executed, as illustrated in Fig. 4A, fine acicular precipitates can be precipitated at a high density.

Also, when the artificial temper aging treatment of the second step is executed at a high temperature in this state, as illustrated in Fig. 4B, the acicular precipitates precipitated at a high density can be grown to such size of contributing to high-strengthening. In other words, the number density of the acicular precipitates having the circle equivalent diameter of 2-10 nm can be formed by 30,000 pieces/µm³ or more.

On the other hand, in all cases when the artificial temper aging treatment is executed only once, when the cooling treatment is not executed between the artificial temper aging treatment of the first step even when the artificial temper aging treatment of the second step is executed, and when the artificial temper aging treatments of the first step and the second step do not satisfy the condition described above, there is a risk that the number density of the acicular precipitates cannot be secured sufficiently.

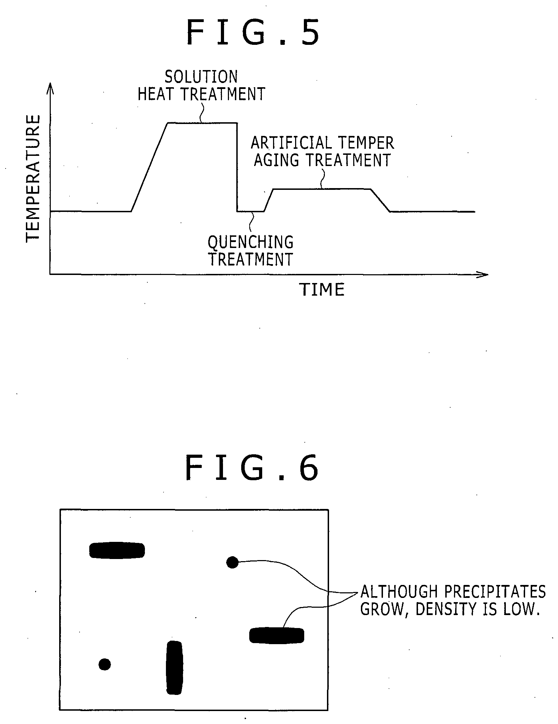

Also, Fig. 5 is an explanatory drawing illustrating the transition of the temperature of the solution heat treatment, quenching treatment, and artificial temper aging treatment in the manufacturing method of the forged material executed commonly. As illustrated in Fig. 5, when the artificial temper aging treatment is to be executed only once to effect high-strengthening, it is common to execute the artificial temper aging treatment at around 200°C for several hours (for example 175°C×8 hrs). However, in such case, as illustrated in Fig. 6, although the acicular precipitates grow to a size capable of contributing to high-strengthening, the number density thereof becomes low, and therefore the strength of the forged material becomes insufficient. Even if the artificial temper aging treatment of the second step is executed, when the cooling treatment is not executed between the artificial temper aging treatment of the first step and when the artificial temper aging treatments of the first step and the second step do not satisfy the condition described above, the strength of the forged material becomes insufficient because of the reason similar to the above.

### [Example]

Next, the present invention will be described based on an example. Also, the present invention is not limited to the example shown below.

The Al alloys having the chemical composition shown in Nos. 1-24 of Table 1 were casted to manufacture ingots (continuous casting bar), and were subjected to homogenization of 500°C×7 hrs. Next, heating was executed to the starting temperature in the column of forging work of Tables 2-1 and 2-2, forging work was executed, and the forged material was manufactured. Also, the finishing temperature of the forging work is as shown in Tables 2-1 and 2-2. The forging work was executed by a hydraulic forging press (described as "hydraulic forging" in Tables 2-1 and 2-2) or a mechanical forging press (described as "mechanical forging" in Tables 2-1 and 2-2). Next, this forged material was subjected to solution heat treatment under a condition of 550°C×4 hrs, and was then put into the water of 40°C for quenching treatment.

Further, the forged material having been subjected to the quenching treatment was subjected to the artificial temper aging treatment of the first step, the cooling treatment, and the artificial temper aging treatment of the second step under the condition shown in Tables 2-1 and 2-2, and the test samples related to Nos. 1-24 were manufactured.

With respect to the test samples related to Nos. 1-24 manufactured, TEM observation was executed as described below, the size (circle equivalent diameter) of the acicular precipitates that could be seen as a point shape was measured, and the number density of the acicular precipitates was counted. The result is shown in Table 3.

### (Size measurement and number density counting of acicular precipitates)

Thin film sample was taken from the test sample related to Nos. 1-24, was subjected to electrolytic polishing by the electrolytic polishing method using a solution of perchloric acid:ethanol=1:9 and a solution of nitric acid:methanol=1:3, and was observed by a TEM. With respect to the TEM, JEM-2100 made by JEOL was used. With respect to photographing of the TEM image, an electron beam was incident from <001> direction to the parent phase of the thin film sample with the acceleration voltage of 120 kV, the observation surface was made (200), and 5 fields of view were observed. The magnification of observation was made 500,000 times. With respect to the observation position, the thickness of the observation part was measured from the equal thickness interference fringe, and the observation position was made only a position where the thickness became 1 µm or less.

Size measurement and counting of the number density of the acicular precipitates were executed using the image analysis software Winproof (Mitani Corporation, Version 6.3). The size of the acicular precipitates was calculated by the circle equivalent diameter of the acicular precipitates that could be seen as a point shape (namely the acicular precipitates whose aspect ratio was 1-2 and circle equivalent diameter was 2-10 nm).

Also, the thickness of the observation part was measured from the equal thickness interference fringe in TEM observation, the result was multiplied by the area of the measurement range, the volume was thereby calculated, and the result obtained by counting all of the number of pieces of the acicular precipitates that could be seen as a point shape and multiplying the same by 3 was made the number of pieces of the acicular precipitates. Further, by converting this number of pieces to a value per unit volume, the number density (pieces/µm³) of the acicular precipitates was obtained.

### (Strength)

Also, by manufacturing the test sample from the test sample related to Nos. 1-24 in accordance with JIS Z 2241 (2011) and executing the metallic material tensile test, the tensile strength (MPa), proof stress (MPa), and elongation (%) were obtained. Those having 420 MPa or more of the tensile strength, 390 MPa or more of the proof stress, and 9% or more of the elongation were evaluated to have a high strength (passed), and those any one out of the tensile strength, proof stress, and elongation became less than the criteria described above were evaluated not to have a high strength (failed). These test results are shown in Table 3.

### (Corrosion resistance)

Also, the corrosion resistance of the test samples related to Nos. 1-24 were evaluated as follows.

The corrosion resistance was evaluated by executing the stress corrosion cracking test (SCC test) in accordance with JIS H 8711 (2000). In concrete terms, the C-ring test sample stipulated in JIS H 8711 (2000) was manufactured from the test sample related to Nos. 1-24, and was evaluated by the alternate immersion method (20 days saline water alternate immersion). Those in which the crack did not occur in 5 pieces out of 5 pieces at the load stress of 200 MPa were evaluated to be preferable in corrosion resistance (Good), and those in which the crack occurred even in one piece were evaluated not to be preferable in corrosion resistance (Poor). The evaluation result of the corrosion resistance is shown in Table 3.

Also, the underlines in Table 1 and Table 3 express that the requirement of the present invention is not satisfied.

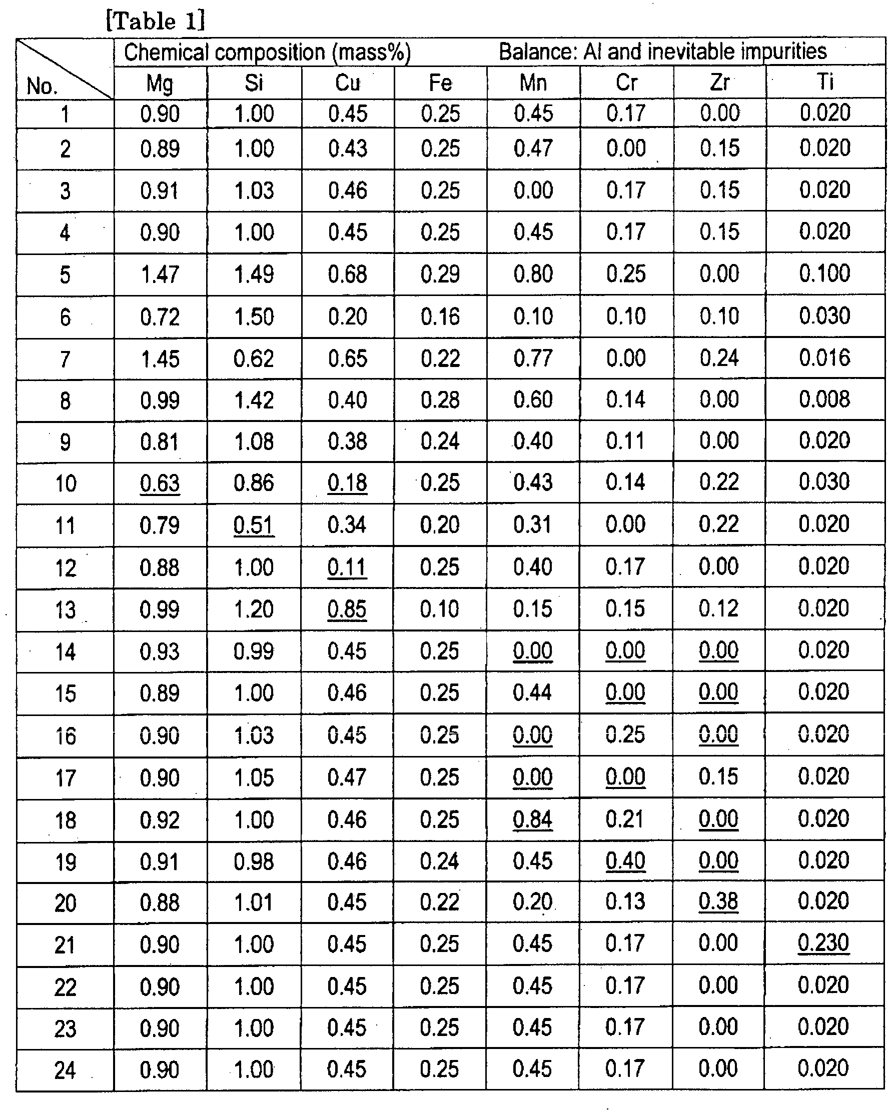

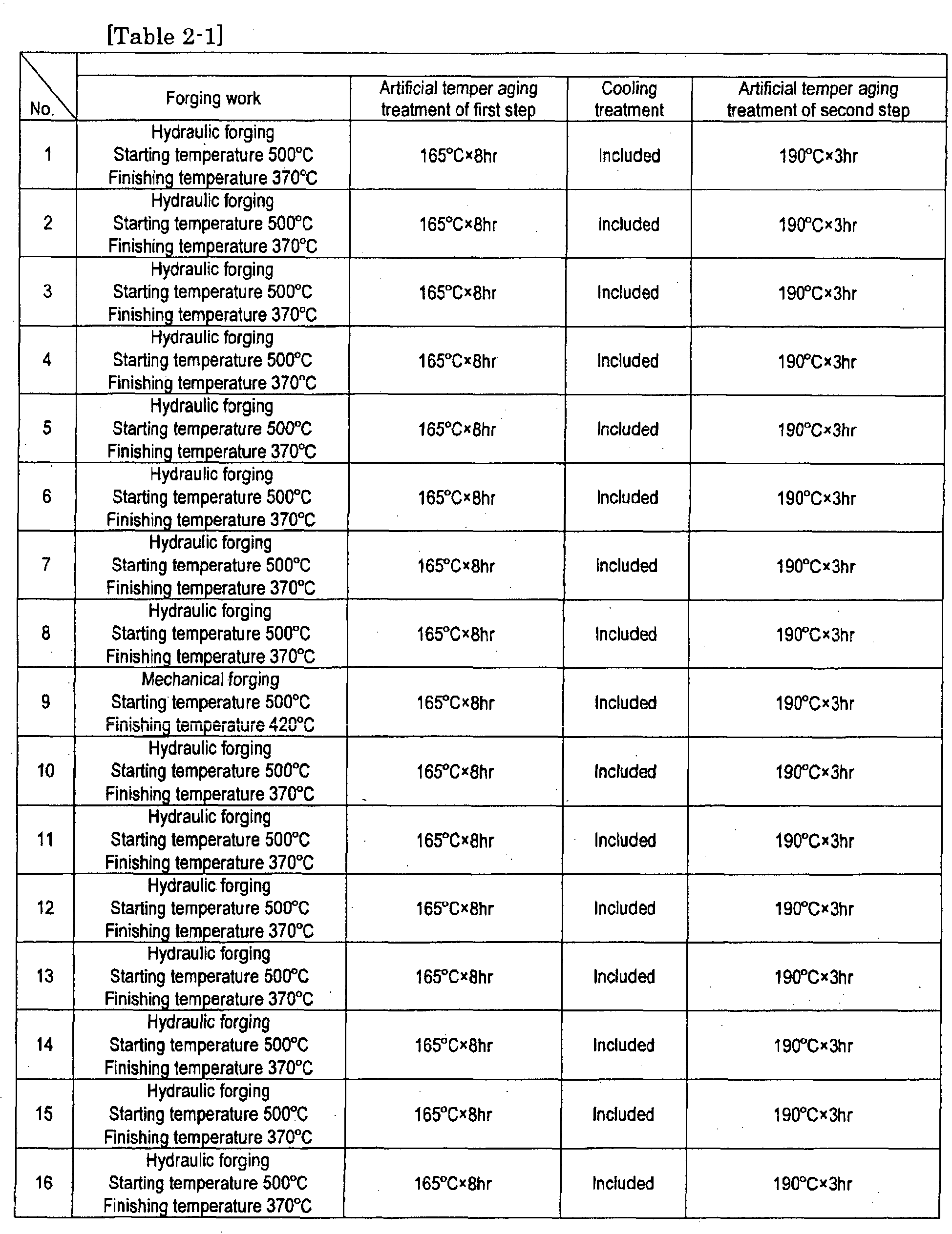

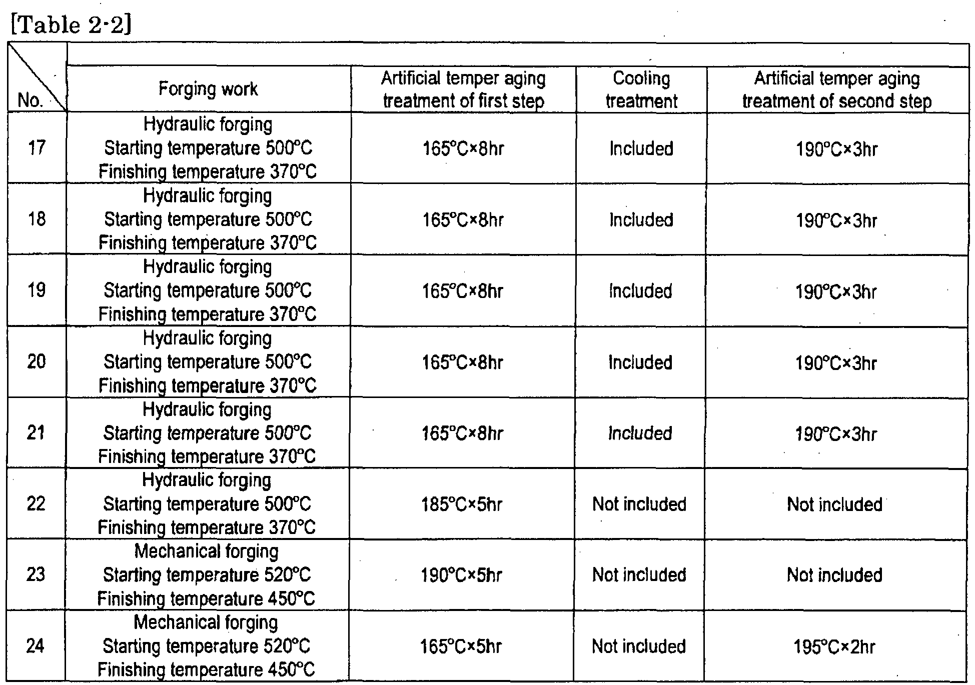

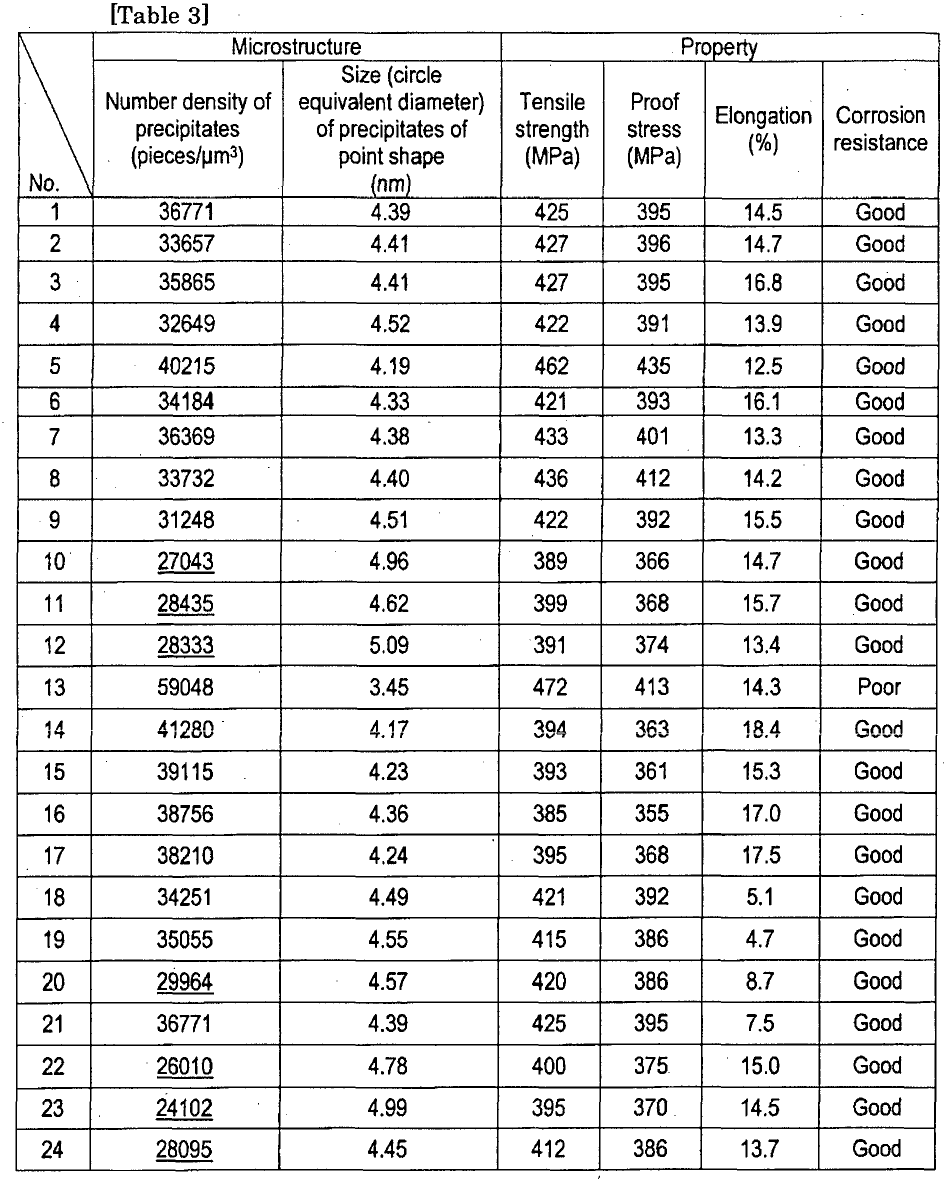

As shown in Table 1-Table 3, the test samples related to Nos. 1-9 satisfied the requirement of the present invention, therefore the tensile strength, proof stress and elongation passed, and it was confirmed to have a high strength (example).

On the other hand, the test samples related to Nos. 10-24 did not satisfy the requirement of the present invention, therefore at least one of the tensile strength, proof stress and elongation did not pass, or the corrosion resistance resulted not to be preferable (comparative example).

More specifically, with respect to the test sample related to No. 10, because Mg and Cu were less, the number density of the acicular precipitates became low. Therefore, the test sample related to No. 10 could not secure a high strength.

With respect to the test sample related to No. 11, because Si was less, the number density of the acicular precipitates became low. Therefore, the test sample related to No. 11 could not secure a high strength.

With respect to the test sample related to No. 12, because Cu was less, the number density of the acicular precipitates became low. Therefore, the test sample related to No. 12 could not secure a high strength.

Although the test sample related to No. 13 had a high strength, because Cu was high, the corrosion resistance was poor.

With respect to the test samples related to Nos. 14-17, because Mn, Cr and Zr were not contained properly, the grain could not be refined. Therefore, the test samples related to Nos. 14-17 could not secure a high strength.

Mn was high in the test sample related to No. 18, Cr was high in the test sample related to No. 19, and Zr was high in the test sample related to No. 20, and therefore coarse crystallized grains were generated respectively. Also, the number density of the acicular precipitates of No. 20 was low. Therefore, all of the test samples related to Nos. 18-20 could not secure a high strength.

With respect to the test sample related to No. 21, because Ti was high, coarse crystallized grains were generated. Therefore, the test sample related to No. 21 could not secure a high strength.

With respect to the test samples related to Nos. 22-24, at least one out of the artificial temper aging treatment of the first step, the cooling treatment, and the artificial temper aging treatment of the second step was not proper. Therefore, in all of the test samples related to Nos. 22-24, the number density of the acicular precipitates became low, and a high strength could not be secured.

Although the forged aluminum alloy for automobiles related to the present invention was described specifically by the embodiment and examples as above, the present invention is not to be limited to them.

## Claims

1. A forged aluminum alloy for automobiles, comprising:
Mg: 0.70-1.50 mass%;
Si: 0.60-1.50 mass%;
Cu: 0.20-0.70 mass%;
Ti: 0.001-0.100 mass%, and comprising two elements or more out of
Mn: 0.01-0.80 mass%;
Cr: 0.10-0.30 mass%; and
Zr: 0.05-0.25 mass%, the balance being Al and inevitable impurities, wherein
the number density of acicular precipitates having the circle equivalent diameter of 2-10 nm is 30,000 pieces/µm³ or more.

## Patentansprüche

1. Geschmiedete Aluminiumlegierung für Kraftfahrzeuge, umfassend:
Mg: 0,70-1,50 Massen-%;
Si: 0,60-1,50 Massen-%;
Cu: 0,20-0,70 Massen-%;
Ti: 0,001-0,100 Massen-%, und umfassend zwei Elemente oder mehr von:
Mn: 0,01-0,80 Massen-%;
Cr: 0,10-0,30 Massen-%; und
Zr: 0,05-0,25 Massen-%, wobei der Rest Al und unvermeidbare Verunreinigungen ist, wobei
die Teilchendichte von nadelförmigen Ausscheidungen mit dem Kreisäquivalentdurchmesser von 2-10 nm 30.000 Teilchen/µm³ oder mehr beträgt.

## Revendications

1. Alliage forgé d'aluminium pour automobiles, comprenant :
Mg : 0,70-1,50% en masse ;
Si : 0,60-1,50% en masse ;
Cu : 0,20-0,70% en masse ;
Ti : 0,001-0,100% en masse, et comprenant deux ou plusieurs éléments parmi :
Mn : 0,01-0,80% en masse ;
Cr : 0,10-0,30% en masse ; et
Zr : 0,05-0,25% en masse, le reste étant Al et d'inévitables impuretés, où
la densité numérique de précipités aciculaires ayant un diamètre de cercle équivalent de 2-10 nm est de 30 000 pièces/µm³ ou plus.
